# EUROPEAN PATENT SPECIFICATION

(11) **EP 1 245 863 B1**
(45) Date of publication and mention of the grant of the patent: **26.05.2010**
(21) Application number: 02006449.9
(22) Date of filing: 22.03.2002
(51) Int. Cl.: F16H 3/00, F16H 3/093, F16D 21/06, F16H 63/18

(54) **A motor-vehicle gearbox**
Fahrzeuggetriebe
Boîte de vitesse de véhicule

(30) Priority: 27.03.2001 IT TO010284
(43) Date of publication of application: 02.10.2002
(60) Divisional application: 05112658.9
(73) Proprietor: C.R.F. Società Consortile per Azioni, 10043 Orbassano (Torino) (IT)
(72) Inventor: Baldascini, Filippo, 10135 Torino (IT); Caenazzo, Dario, 10060 Scalenghe (Torino) (IT); Garabello, Marco, 10135 Torino (IT); Mesiti, Domenico, 10040 Leiní (Torino) (IT); Pesola, Fabio, 10144 Torino (IT); Pregnolato, Gianluigi, 10024 Moncalieri (Torino) (IT); Uberti, Maurizio, 10135 Torino (IT)
(74) Representative: Rondano, Davide

(56) References cited:
- EP-A- 0 288 779
- EP-A- 1 067 312
- EP-A- 1 077 336
- EP-A- 1 134 447
- DE-A1- 3 037 990
- DE-A1- 19 923 185
- US-B- 4 518 070

## Description

The present invention relates to a motor-vehicle gearbox comprising two coaxial input shafts and at least two output shafts, as defined in the preamble of claim 1.

A gearbox of the above-specified type is known from EP-A-1 077 336.

Moreover, DE 30 37 990 A1 discloses a double-clutch gearbox having an inner input shaft and an outer input shaft, wherein one of the clutches is operated by a rod which is accommodated slidably within the inner input shaft. A sliding sleeve is mounted on an end portion of the rod and has an annular groove in which an actuation member for actuation of the clutch engages. The actuation member is slidably arranged in a guide way provided in a gear shifting gate driven by a servo motor.

EP-A-1 134 447 discloses a clutch unit comprising two clutches associated to a pair of coaxial input shafts of a double-clutch gearbox, as well as an operating rod which is received in a cavity of the inner input shaft and can be operated, for instance by hydraulic means, to control one of the two clutches. In case of hydraulic actuation of the operating rod, the operating rod itself forms the piston stem of a piston and cylinder assembly. Apart from that, the above-mentioned document is silent about the arrangement of the piston and cylinder assembly by means of which the operating rod is actuated.

US 4 518 070 A2 discloses a single-clutch gearbox provided with a hydraulically-operated clutch actuating device which includes an operating rod and a piston controlling the movement of the operating rod, wherein the piston is received in a cavity formed by a special element secured to the casing of the gearbox.

The object of the present invention is to provide gearboxes with two clutches that are of simple structure and have small axial dimensions.

This object is achieved in full by a gearbox according to the present invention, by virtue of the fact that it comprises:
- two coaxial input shafts, that is, an inner shaft and an outer shaft, respectively, of which the former drives the set of gears associated with the even gear or transmission ratios and the latter drives the set of gears associated with the odd gear ratios,
- at least two output shafts parallel with the input shafts and each provided with a respective final reduction pinion for meshing with an input gear of a differential, and
- a rod for operating one of the friction clutches, the rod extending within a coaxial cavity of the inner input shaft.

These and other characteristics, as well as further objects and advantages of the invention, will become clearer from the following detailed description, given purely by way of non-limiting example with reference to the appended drawings, in which:
Figure 1 is a longitudinal section view through a motor-vehicle transmission unit provided with a gearbox according to a first embodiment of the invention,
Figure 2 is a longitudinal section view through a second embodiment of the gearbox according to the invention,
Figure 3 is a longitudinal section view through a third embodiment of the gearbox according to the invention, and
Figures 4A and 4B are two longitudinal section views through a fourth embodiment of the gearbox according to the invention.

To facilitate an understanding of the description and of the drawings relating to the various embodiments of the invention, similar or identical parts and elements will be referred to by the same reference numerals below.

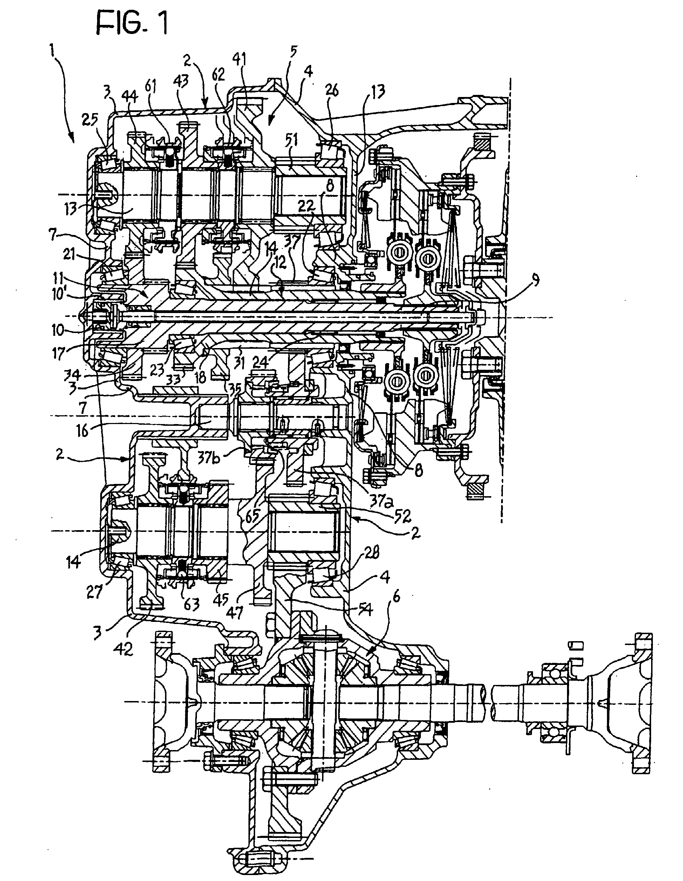

With reference to Figure 1, a motor-vehicle transmission unit, generally indicated 1, comprises a support housing 2 which is constituted by two half-shells 3 and 4, clamped together, and houses a gearbox 5 according to the invention and a differential 6.

The gearbox 5, which is of the type with independent gears, that is, gears that are not shared, comprises:
two coaxial input shafts 11 and 12, that is, an inner shaft and an outer shaft, respectively,
two output shafts 13 and 14, and
an intermediate shaft 16,
the output shafts and the intermediate shaft being parallel but not coaxial.

The inner input shaft 11 has an end portion 17 of enlarged diameter which projects from the outer input shaft 12 at the end remote from a unit with friction clutches and from an engine (not shown), and has a cylindrical outer surface on which a bearing and one or more driving ring gears are mounted.

The assembly of the two input shafts 11 and 12 is supported by the housing 2 by means of a pair of radial taper-roller bearings 21 and 22 mounted in a so-called X-shaped arrangement. The inner ring of the bearing 21 is fitted on the enlarged-diameter end portion 17 of the inner input shaft 11, in abutment with a ring gear 34, and the outer ring is housed in a cylindrical seat formed in a vertical wall 7 of the half-shell 3. The inner ring of the bearing 22 is fitted on the hub of a gear 37 keyed to an intermediate portion of the outer input shaft 12 and the outer ring is housed in a cylindrical seat formed in a vertical wall 8 of the half-shell 4.

The inner input shaft 11 in turn is supported by the outer shaft 12 by means of a radial taper-roller bearing 23 and a needle roller bearing 24. The inner ring of the bearing 23 is fitted on the shaft 11, in abutment with a shoulder constituted by the side wall of the enlarged-diameter portion 17, and the outer ring is housed in a cylindrical seat formed in a ring gear 33 at the left-hand end (as seen in the drawing) of the shaft 12. The bearing 24 is superimposed on the bearing 22 (where the term "superimposed" should be understood as meaning "positioned substantially at the same axial or longitudinal level").

The inner input shaft 11 has a coaxial cavity in which an operating rod 9 for operating one of the two friction clutches of the transmission unit 1 is arranged slidably. The rod 9 in turn is operated by a fluid-operated piston 10 mounted slidably in a cylindrical seat projecting from the wall 7 of the half-shell 3 and extending in a cylindrical cavity in the portion 17 of the shaft 11, in the region of the bearing 21.

The wall 8 which separates the gearbox 5 from the clutch unit has an opening through which the assembly of the two input shafts 11 and 12 extends towards that unit. Two oil-seal rings are fitted between the wall 8 and the outer input shaft 12 and between the two input shafts 11 and 12, respectively, to prevent lubricating oil passing from the gearbox compartment 5 to the clutch unit, if the clutches operate dry.

The inner input shaft 11 carries, on the enlarged-diameter portion 17, a plurality of driving ring gears relating to corresponding gear or transmission ratios. In the embodiment of Figure 1, these ring gears are associated with the even gear ratios (second, fourth and possibly sixth). In particular, a ring gear 32 associated with the second gear ratio is formed on the portion 17 of the input shaft 11 and the ring gear 34 associated with the fourth gear ratio is keyed to that portion, in abutment with the ring gear 32.

Similarly, the outer input shaft 12 carries a plurality of driving ring gears relating to corresponding gear or transmission ratios. In this first embodiment, these ring gears are associated with the odd gear ratios and with the reverse gear ratio. In particular, still with reference to Figure 1, it is possible to see, from left to right:
- the ring gear 33 associated with the third gear ratio,
- a ring gear 35 associated with the fifth gear ratio, keyed to the shaft 12 in abutment with a shoulder formed in a frustoconical portion 18 acting as a connection between the ring gear 33 and an intermediate, minimum-diameter portion 19 of that shaft,
- a ring gear 31 associated with the first gear ratio, formed on the portion 19, and
- the ring gear 37 associated with the reverse gear ratio, keyed to the shaft 12, in abutment with the ring gear 31.

The input shafts 11 and 12 can receive torque from an engine shaft (not shown) via the clutch unit.

The two output shafts 13 and 14 of the gearbox 5 are both supported by the two half-shells 3 and 4 of the housing 2, by pairs of radial taper-roller bearings 25, 26 and 27, 28, respectively, mounted in an X-shaped arrangement. The output shafts are parallel but not coaxial with one another and parallel but not coaxial with the two input shafts 11 and 12, of which they are situated on opposite sides.

Each of the output shafts 13 and 14 carries:
- a plurality of idle gears acting as driven gears associated with corresponding gear or transmission ratios,
- one or more axially slidable sleeves provided with synchronizing devices for the selection and engagement of the gear ratios,
- a final reduction pinion meshing (in a manner not shown in the drawing) with an input gear 54 of the set of gears of the differential 6.

In particular, with reference to Figure 1, it is possible to see, from left to right, on the output shaft 13:
- the bearing 25, the inner ring of which is fitted directly on the end portion of the shaft 13 and the outer ring of which is housed in a cylindrical seat in the wall 7 of the half-shell 3,
- an idle gear 44 associated with the fourth gear ratio,
- a sleeve 61 for the engagement of the fourth gear ratio or, when the transmission unit provides six gear ratios, for the selection and engagement of the fourth or of the sixth gear ratios,
- an idle gear 43 associated with the third gear ratio,
- a sleeve 62 for the selection and engagement of the third or of the first gear ratio,
- an idle gear 41 associated with the first gear ratio,
- a final reduction pinion 51, and
- the bearing 26, the inner ring of which is fitted on the hub of the pinion 51 in abutment with the teeth of the pinion and the outer ring of which is housed in a cylindrical seat in the wall 8 of the half-shell 4.

With regard to the output shaft 14, it is possible to see in Figure 1, from left to right:
- the bearing 27, the inner ring of which is fitted directly on the end portion of the shaft 14 and the outer ring of which is housed in a cylindrical set in the wall 7 of the half-shell 3,
- an idle gear 42 associated with the second gear ratio,
- a sleeve 63 for the selection and engagement of the second or of the fifth gear ratio,
- an idle gear 45 associated with the fifth gear ratio,
- a ring gear 47 associated with the reverse gear ratio and fixed for rotation with the shaft 14,
- a final reduction pinion 52 having the same number of teeth as the pinion 51 carried by the output shaft 13, and
- the bearing 28, the inner ring of which is fitted on the hub of the pinion 52 in abutment with the teeth of the pinion and the outer ring of which is housed in a cylindrical seat in the wall 8 of the half-shell 4.

The intermediate shaft 16 is supported by the housing 2 with its end portions fitted in respective cylindrical seats formed in the two half-shells 3 and 4 and is locked with respect to rotation by means of a screw (not shown in Figure 1). The shaft 16 carries two idle gears 37a and 37b which can be coupled for rotation with one another by means of a clutch device 65.

The various gear ratios of the gearbox 5 according to this first embodiment are obtained in the manner described below.

The first gear ratio is obtained by causing the driving ring gear 31 on the outer input shaft 12 to mesh with the idle gear 41 on the output shaft 13 as a result of an axial movement of the sleeve 62 to the right, which enables the idle gear 41 to be coupled for rotation with the shaft 13.

The second gear ratio is obtained by causing the driving ring gear 32 on the inner input shaft 11 to mesh with the idle gear 42 on the output shaft 14 as a result of an axial movement of the sleeve 63 to the left, which enables the idle gear 42 to be coupled for rotation with the shaft 14.

The third gear ratio is obtained by causing the driving ring gear 33 on the outer input shaft 12 to mesh with the idle gear 43 on the output shaft 13 as a result of an axial movement of the sleeve 62 to the left, which enables the idle gear 43 to be coupled for rotation with the shaft 13.

The fourth gear ratio is obtained by causing the driving ring gear 34 on the inner input shaft 11 to mesh with the idle gear 44 on the output shaft 13 as a result of an axial movement of the sleeve 61 to the left, which enables the idle gear 44 to be coupled for rotation with the shaft 13.

The fifth gear ratio is obtained by causing the driving ring gear 35 on the outer input shaft 12 to mesh with the idle gear 45 on the output shaft 14 as a result of an axial movement of the sleeve 63 to the right, which enables the idle gear 45 to be coupled for rotation with the shaft 14.

Finally, the reverse gear ratio is obtained by causing the driving ring gear 37 on the outer input shaft 12 to mesh with the idle gear 37a on the intermediate shaft 16 and the idle gear 37b on the shaft 16 to mesh with the driven ring gear 47 on the output shaft 14, as a result of the operation of the clutch device 65, which enables the idle gears 37a and 37b to be coupled for rotation. This set of idle gears thus operates as an idler of a set of gears with three gears, enabling the direction of rotation of the output shaft 14 to be reversed.

By virtue of the fact that the sleeves 62 and 63 can engage non-consecutive gear ratios, it is possible to engage two consecutive gear ratios simultaneously, as is necessary when the gearbox 5 is used for a sequential transmission with a gear-preselection mechanism.

A further advantage also results from the particular arrangement of the sleeves, that is, from the fact that the sleeve 62 of the first and third gear ratios is superimposed on the ring gears or gears 35 and 45 of the set of gears of the fifth gear ratio, the sleeve 63 of the second and fifth gear ratios is superimposed on the ring gears or gears 33 and 43 of the set of gears of the third gear ratio and, finally, the sleeve 61 of the fourth gear ratio is superimposed on the ring gears or gears 32 and 42 of the set of gears of the second gear ratio. This configuration minimizes the axial dimension of the gearbox, which is thus substantially equal to the sum solely of the axial dimensions of the sets of gears associated with the forward gear ratios.

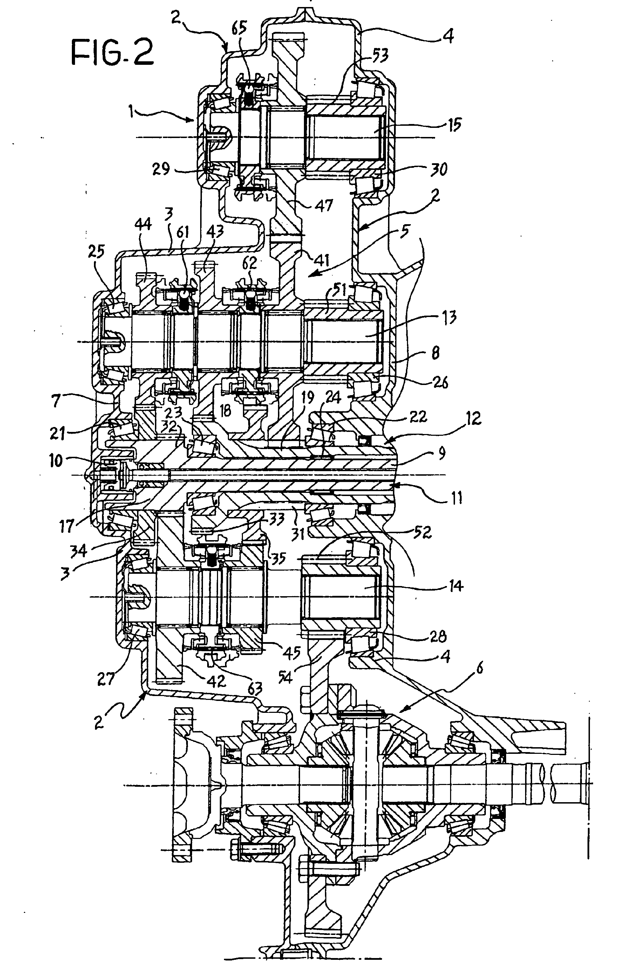

With reference now to Figure 2, a transmission unit 1 comprises a different embodiment of the gearbox 5 according to the present invention and a differential 6, which are housed within a support housing 2 formed by two half-shells 3 and 4.

The gearbox 5 is again of the type with independent gears and shares with the embodiment of Figure 1:
- two coaxial input shafts, that is, an inner shaft 11 and an outer shaft 12 carrying the driving ring gears which drive the sets of gears associated with the even gear ratios and with the odd gear ratios and the reverse gear ratio, respectively,
- an operating rod 9 for one of the clutches, arranged for sliding in the axial cavity of the inner input shaft 11 and operable in known manner by the piston 10, and
- two output shafts 13 and 14 which carry:
   a plurality of driven gears 41-45 relating to the forward gear ratios,
   sliding sleeves 61-63 for selectively coupling one of the driven gears for rotation with the shaft on which that gear is mounted idly, in order to engage the desired gear ratio, and
   two final reduction pinions 51 and 52 having the same number of teeth and both meshing with the input gear 54 of the set of gears of the differential 6.

The mounting of the bearings both of the input shafts 11 and 12 and of the output shafts 13 and 14 is substantially similar to that of the first embodiment, as are the arrangement and method of selection and engagement of the forward gear ratios.

Differences with respect to the first embodiment, on the other hand, relate to the arrangement and method of selection and engagement of the reverse gear ratio. In the embodiment of Figure 2, the intermediate shaft is in fact omitted and is replaced by a third output shaft 15 which is parallel but not coaxial with the other two output shafts 13 and 14 and on the right-hand end of which is keyed a third final reduction pinion 53 meshing with the input gear 54 of the set of gears of the differential 6.

The output shaft 15 is supported by the two half-shells 3 and 4 of the housing 2 in a manner similar to that of the other two output shafts 13 and 14, that is, by a pair of radial taper-roller bearings 29 and 30, mounted in an X-shaped arrangement. With reference to Figure 2, it is possible to see, from left to right, on the output shaft 15:
- the bearing 29, the inner ring of which is fitted directly on the end portion of the shaft 15 and the outer ring of which is housed in a cylindrical seat formed in a wall 7 of the half-shell 3,
- a sliding sleeve 65 provided with a synchronization device for the engagement of the reverse gear ratio,
- an idle gear 47 constituting the driven gear of the set of gears of the reverse gear ratio,
- the final reduction pinion 53, and
- the bearing 30, the inner ring of which is fitted on the hub of the pinion 53 and the outer ring of which is housed in a cylindrical seat formed in a wall 8 of the half-shell 4.

In comparison with the first embodiment, in this embodiment, the ring gear 37 on the outer input shaft 12 and the gear 47 on the output shaft 14 are omitted. In this second embodiment, in fact, the set of gears of the reverse gear ratio shares with the set of gears of the first gear ratio a ring gear 31 on the outer input shaft 12 and the idle gear 41 on the output shaft 13. The set of gears of the reverse gear ratio is therefore constituted by the set of three ring gears or gears 31, 41 and 47 in which the gear 41 acts as an idler. The reverse gear ratio can now be engaged by moving the sleeve 65 to the right so as to fix the idle gear 47 for rotation with the output shaft 15.

The advantage of this second embodiment consists substantially in the reduction in the axial dimension, resulting from the elimination of a ring gear (that indicated 37 in Figure 1) solely for driving the set of gears of the reverse gear ratio, from the outer input shaft 12.

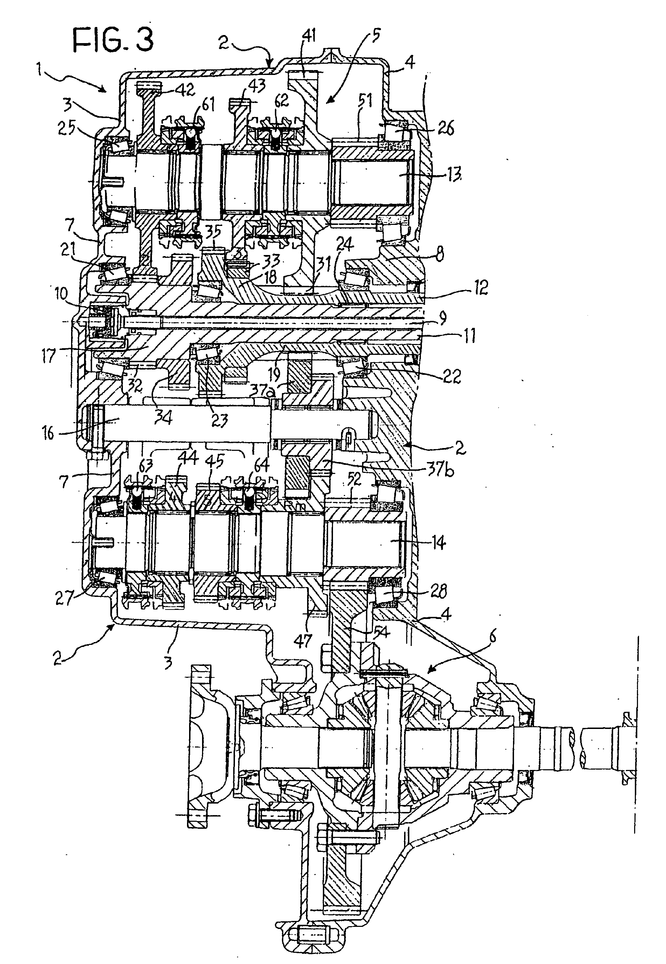

A third embodiment of the motor-vehicle gearbox 5 according to the invention, shown in Figure 3, again provides for a gearbox of the type with independent gears, which shares with the previous two embodiments:
- two coaxial input shafts, that is, an inner shaft 11 and an outer shaft 12, carrying the driving ring gears which drive the gears associated with the even gear ratios and with the odd gear ratios and the reverse gear ratio, respectively,
- an operating rod 9 for one of the clutches, slidable in an axial cavity of the inner input shaft 11 by means of a piston 10, and
- two output shafts 13 and 14 which carry:
   a plurality of driven gears 41-45 and 47 relating to the various gear ratios,
   slidable sleeves 61-64 for selectively coupling one of the driven gears for rotation with the shaft on which that gear is mounted idly in order to engage the desired gear ratio, and
   two final reduction pinions 51 and 52 having the same number of teeth and both meshing with the input gear 54 of the set of gears of the differential 6.

As in the first embodiment, there is also an intermediate shaft 16 for the reverse gear ratio, arranged suitably between the assembly of the two input shafts 11 and 12 and the output shaft 14 and parallel but not coaxial with these shafts.

The mounting of the bearings both of the input shafts 11 and 12 and of the output shafts 13 and 14 is substantially similar to that of the first two embodiments, whereas the arrangement of the sets of gears and the method of selection and engagement of both forward and reverse gear ratios are different.

In this connection, in fact, the output shaft 13 carries the idle gears associated with the low gear ratios (first, second and third) and the output shaft 14 carries the idle gears associated with the high gear ratios (fourth, fifth and possibly sixth) and with the reverse gear ratio.

With regard to the sets of driving teeth of the gears relating to the various gear ratios, an enlarged-diameter portion 17 of the inner input shaft 11 carries, in order, from left to right as seen in Figure 3, a ring gear 32 for the second gear ratio and, in abutment therewith, a ring gear 34 for the fourth gear ratio.

On the outer input shaft 12 there can be seen, in order, from left to right, a ring gear 35 for the fifth gear ratio, a ring gear 33 for the third gear ratio, keyed to the shaft in abutment with a shoulder formed in a frusto-conical portion 18 of the shaft, and a toothing 31 for the first gear ratio, formed on a minimum-diameter portion 19 of the shaft.

The output shaft 13 carries, in order, from left to right, the idle gears 42, 43 and 41 associated with the second, third and first gear ratios, respectively. The gear 42 can be coupled for rotation with the shaft 13 by the sliding sleeve 61, which is provided with a synchronizing device, and the gears 43 and 41 can be coupled selectively for rotation with that shaft by means of the sliding sleeve 62.

The output shaft 14 carries, in order, from left to right, the idle gears 44, 45 and 47 associated with the fourth, fifth and reverse gear ratios, respectively. The gear 44 can be coupled for rotation with the shaft 14 by the sleeve 63 and the gears 45 and 47 can be coupled selectively for rotation with that shaft by means of the sleeve 64.

The intermediate shaft 16, which is supported by a housing 2 in a manner such as to be locked both for translation and for rotation, carries an idle gear 37b to the hub of which a ring gear 37a is keyed.

The various gear ratios of the gearbox of Figure 3 are obtained as described below.

The first gear ratio is obtained by causing the toothing 31 on the outer input shaft 12 to mesh with the idle gear 41 on the output shaft 13 as a result of an axial movement of the sleeve 62 to the right.

The second gear ratio is obtained by causing the driving toothing 32 on the inner input shaft 11 to mesh with the idle gear 42 on the output shaft 13 as a result of an axial movement of the sleeve 61 to the left.

The third gear ratio is obtained by causing the driving ring gear 33 on the outer input shaft 12 to mesh with the idle gear 43 on the output shaft 13 as a result of an axial movement of the sleeve 62 to the left.

The fourth gear ratio is obtained by causing the driving ring gear 34 on the inner input shaft 11 to mesh with the idle gear 44 on the output shaft 14, as a result of an axial movement of the sleeve 63 to the right.

The fifth gear ratio is obtained by causing the driving ring gear 35 on the outer input shaft 12 to mesh with the idle gear 45 on the output shaft 14 as a result of an axial movement of the sleeve 64 to the left.

Finally, the reverse gear ratio is obtained by causing the driving toothing 31 (which is thus shared with the set of gears of the first gear ratio) to mesh with the ring gear 37a on the intermediate shaft 16 and the idle gear 37b on this shaft to mesh with the driven gear 47 on the output shaft 14, as a result of an axial movement of the sleeve 64 to the right.

The set of gears 37a and 37b, which are fixed for rotation together, thus acts as an idler in the set of gears of the reverse gear ratio, enabling the direction of rotation of the output shaft 14 to be reversed. This set of gears also performs a double reduction of the transmission ratio, thus permitting the use of gears with a smaller number of teeth for a given desired final transmission ratio, with a consequent advantage in terms of a reduction in the transverse dimension of the gearbox.

Another advantage lies in the fact that all of the sleeves 61-64 for the selection and engagement of the forward gear ratios and of the reverse gear ratio are mounted on the two output shafts 13 and 14.

A further advantage lies in the fact that the high gear ratios (fourth, fifth and possibly sixth) are associated with a single output shaft, that is, the shaft 14, which is disposed at a small distance from the assembly of the two input shafts 11 and 12 so that the peripheral velocities are correspondingly reduced.

The structure of the gearbox 5 can also easily permit the addition of a sixth gear ratio since it suffices, in fact, to lengthen the output shaft 14 suitably so as to leave adequate space between a bearing 27 and the sliding sleeve 63 to house a further idle gear. This gear, which could be coupled for rotation with the shaft 14 as a result of an axial movement of the sleeve 63 to the left, would mesh permanently with a respective driving toothing disposed on the inner input shaft 11, on the enlarged-diameter portion 17, between a bearing 21 and the ring gear 32.

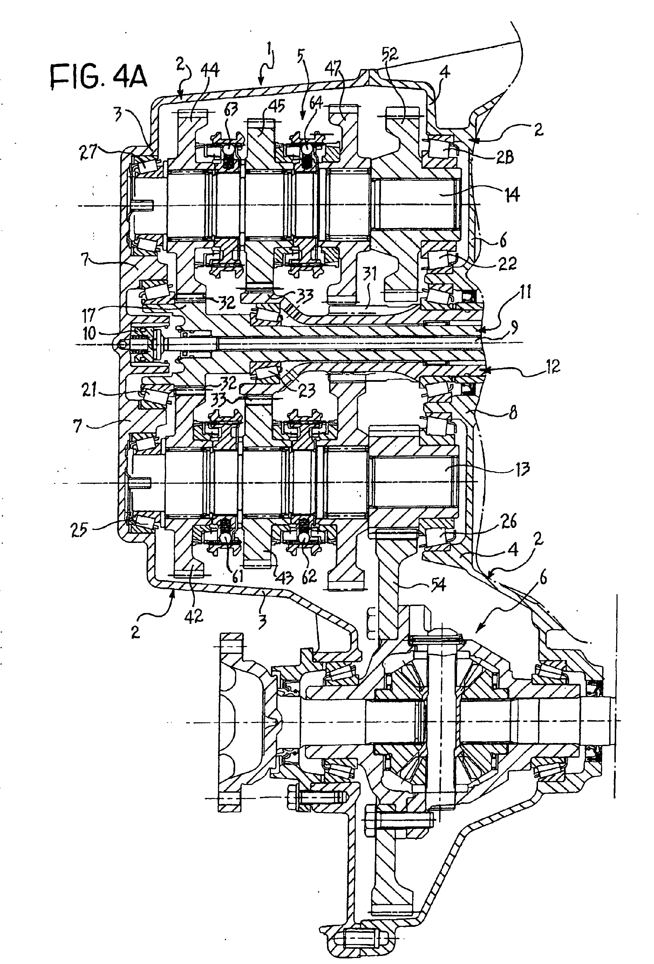

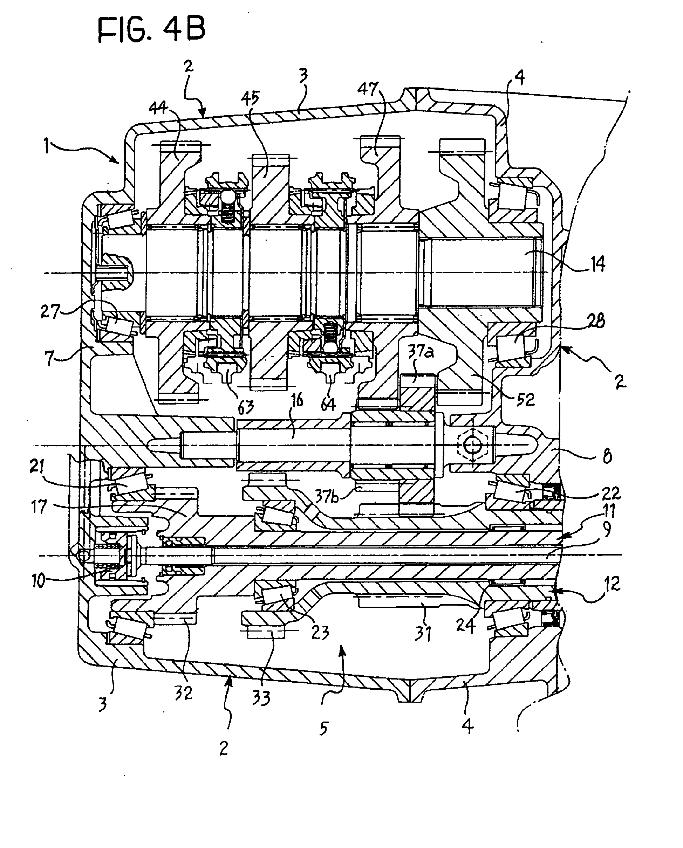

Finally, with reference to Figures 4A and 4B, a fourth embodiment of the motor-vehicle gearbox 5 according to the invention, which is not of the type with independent gears but has shared gears, has in common with the preceding embodiments:
- two coaxial input shafts, that is, an inner shaft 11 and an outer shaft 12, carrying the driving ring gears which drive the sets of gears associated with the even gear ratios and with the odd gear ratios and the reverse gear ratio, respectively,
- an operating rod 9 for one of the clutches, arranged slidably in an axial cavity of the inner input shaft 11 and operable, in known manner, by a piston 10, and
- two output shafts 13 and 14 which carry:
   a plurality of driven gears 41-45 and 47, associated with the various gear ratios,
   sliding sleeves 61-64 for selectively coupling one of the driven gears for rotation with the shaft on which that gear is mounted idly, in order to engage the desired gear ratio, and
   two final reduction pinions 51 and 52 both meshing with the input gear 54 of the set of gears of the differential 6.

As in the first embodiment, there is also an intermediate shaft 16 for the reverse gear ratio (Figure 4B), arranged suitably between the assembly of the two input shafts 11 and 12 and the output shaft 14, and parallel but not coaxial with these shafts.

The mounting of the bearings both of the input shafts 11 and 12 and of the output shafts 13 and 14 is similar to that of the previous embodiments.

As in the embodiment of Figure 3, the driven gears associated with the low gear ratios (first, second and third) are mounted idly on one of the two output shafts (in particular, the shaft 13) and the driven gears associated with the high gear ratios (fourth and fifth) and with the reverse gear ratio are mounted idly on the other output shaft (in this case the shaft 14). Moreover, a gear provided with a double toothing is mounted idly on the intermediate shaft 16 and acts as an idler in the set of gears of the reverse gear ratio.

The substantial difference in comparison with the preceding embodiments lies in the fact that the two pairs of even gear ratios (second and fourth) and of odd gear ratios (third and fifth) are shared.

That is, these pairs of gear ratios have identical pairs of driven gears, each disposed on one of the two output shafts 13 and 14 and meshing in pairs with the same driving toothing carried by the inner input shaft 11 for the even gear ratios and by the outer input shaft 12 for the odd gear ratios. The interaxial spacing between each of the two output shafts 13 and 14 and the assembly of the two input shafts 11 and 12 is also identical. The difference in the transmission ratio between the shared gear ratios is thus achieved with the use of final reduction pinions with different numbers of teeth; in particular, the number of teeth of the pinion 51, which is keyed to the output shaft 13 associated with the low gear ratios, is less than the number of teeth of the pinion 52, which is keyed to the output shaft 14 associated with the high gear ratios.

A driving toothing 32 formed on an enlarged-diameter portion 17 of the inner input shaft 11 meshes simultaneously with the two driven gears 42 and 44 of the second and fourth gear ratios, respectively.

On the outer input shaft 12, there are formed in order, from left to right as seen in Figures 4A and 4B, a driving ring gear 33 which meshes simultaneously with the two driven gears 43 and 45 of the third and fifth gear ratios, respectively, and a driving toothing 31 which meshes simultaneously with the driven gear 41 of the first gear ratio (Figure 4A) and with an idle gear 37a (Figure 4B) on the hub of which a toothing 37b is formed.

On the output shaft 13, there are disposed from left to right, again with reference to Figure 4A, the idle driven gears 42, 43 and 41, between which are interposed the sliding sleeves 61 and 62 for coupling for rotation with that shaft solely the gear 42, and one of the gears 43 and 41, respectively. Similarly, on the output shaft 14 there are disposed the driven idle gears 44, 45 and 47, between which are interposed the sliding sleeves 63 and 64 for coupling for rotation with that shaft solely the gear 44, and one of the gears 45 and 47, respectively.

The various gear ratios of the gearbox according to this fourth embodiment can be obtained in the following manner.

The first gear ratio is obtained by causing the driving toothing 31 on the outer input shaft 12 to mesh with the idle gear 41 on the output shaft 13 as a result of an axial movement of the sleeve 62 to the right.

The second gear ratio is obtained by causing the driving toothing 32 on the inner input shaft 11 to mesh with the idle gear 42 on the output shaft 13 as a result of an axial movement of the sleeve 61 to the left.

The third gear ratio is obtained by causing the driving ring gear 33 on the outer input shaft 12 to mesh with the idle gear 43 on the output shaft 13 as a result of an axial movement of the sleeve 62 to the left.

The fourth gear ratio is obtained by causing the driving ring gear 32 on the inner input shaft 11 to mesh with the idle gear 44 on the output shaft 14 as a result of an axial movement of the sleeve 63 to the left.

The fifth gear ratio is obtained by causing the driving ring gear 33 on the outer input shaft 12 to mesh with the idle gear 45 on the output shaft 14 as a result of an axial movement of the sleeve 64 to the left.

Finally, the reverse gear ratio is obtained by causing the driving toothing 31 on the outer input shaft 12 to mesh with the idle gear 37a on the intermediate shaft 16 and the toothing 37b formed on the hub of the gear 37a to mesh with the idle gear 47 on the output shaft 14, as a result of an axial movement of the sleeve 64 to the right.

An advantage of this fourth embodiment consists of a reduction in the axial dimension of the gearbox, since this dimension is substantially equal to the width of the three first/reverse, third/fifth and second/fourth gear pairs and of the two pairs of sleeves 61, 63 and 62, 64, arranged in superimposed pairs.

Another advantage is a reduction in the number of components as a result of the fact that the driven gears 43, 45 of the third and fifth gear ratios and the driven gears 42, 44 of the second and fourth gear ratios are identical, in pairs, as are the two output shafts 13 and 14.

Naturally, the principle of the invention remaining the same, the forms of embodiment and details of construction may be varied widely with respect to those described and illustrated purely by way of non-limiting example, without thereby departing form the scope of the invention as defined in the appended claims.

## Claims

1. A gearbox (5) for a motor-vehicle transmission unit (1), the gearbox (5) comprising:
a first input shaft (11) and a second input shaft (12), that is, an inner shaft (11) and an outer shaft (12), respectively, arranged coaxially with one another, and at least a first output shaft (13) and a second output shaft (14), parallel with the input shafts (11, 12),
a plurality of driving ring gears or gears (31-35, 37), relating to the various gear or transmission ratios, and carried by the input shafts (11, 12),
a plurality of driven ring gears or gears (41-45, 47) relating to the various gear or transmission ratios, and carried by the output shafts (13, 14),
selection means (61-65) for the selection of the desired gear ratio, and
two friction clutches,
**characterized in that** the gearbox (5) further comprises an operating rod (9) arranged slidably in a coaxial cavity of the inner input shaft (11) for operating one of the friction clutches, and a fluid-operated piston (10) mounted slidably in an end portion (17) of the inner input shaft (11) axially remote from the clutches for operating the rod (9).

2. A gearbox according to Claim 1, **characterized in that** the driven gears (41-45, 47) are mounted idly on the output shafts (13, 14) and each driven gear can be coupled for rotation with the respective shaft by one of the selection means (61-65).

3. A gearbox according to Claim 2, **characterized in that** the selection means (61-65) for selecting the gear ratios are arranged in a manner such that at least one of them can bring about the selection of two non-consecutive gear ratios.

4. A gearbox according to Claim 3, **characterized in that** the selection means (61-65) for selecting the gear ratios comprise sleeves (61-65) arranged for sliding axially on the output shafts (13, 14) and provided with synchronizing devices.

5. A gearbox according to any one of the preceding claims, **characterized in that** the driving ring gears (32, 34) associated with the even gear ratios are carried by one of the two input shafts (11, 12) and that the driving ring gears (31, 33, 35, 37) associated with the odd gear ratios and with the reverse gear ratio are carried by the other input shaft (12, 11).

6. A gearbox according to Claim 5, **characterized in that** the first input shaft (11) carries the driving ring gears (32, 34) associated with the even gear ratios, and that the second input shaft (12) carries the driving ring gears (31, 33, 35, 37) associated with the odd gear ratios and with the reverse gear ratio.

7. A gearbox according to any one of the preceding claims, **characterized in that** first support means (21, 22) for supporting the assembly of the two input shafts (11, 12) are housed in a housing (2) of the gearbox (5) and second support means (23, 24) are disposed between the first and second input shafts (11, 12).

8. A gearbox according to Claim 7, **characterized in that** the first support means for supporting the assembly of the two input shafts (11, 12) comprise a first bearing (21) mounted on the first input shaft (11) and fitted in a cylindrical seat formed in a first wall (7) of the housing (2) and a second bearing (22) mounted on the second input shaft (12) and fitted in a cylindrical seat formed in a second wall (8) of the housing (2).

9. A gearbox according to Claim 8, **characterized in that** the first input shaft (11) has an end (17) of enlarged diameter, which projects axially from the second input shaft (12) and on which the first bearing (21) is mounted.

10. A gearbox according to Claim 8 or Claim 9, **characterized in that** the first and second bearings (21, 22) are radial taper-roller bearings mounted in an X-shaped arrangement.

11. A gearbox according to any one of Claims 7 to 10, **characterized in that** the second support means between the first and second input shafts (11, 12) comprise a radial taper-roller bearing (23) and a needle roller bearing (24).

12. A gearbox according to any one of the preceding claims, **characterized in that** the gearbox is of the type with independent gears and the output shafts (13, 14) carry respective final reduction pinions (51, 52) having the same number of teeth and permanently meshing with an input gear (54) of a differential (6).

13. A gearbox with at least five gear ratios according to any one of Claims 6 to 12, **characterized in that**:
the driven gears (44, 43, 41) of the fourth, third and first gear ratios, respectively, are mounted idly on the first output shaft (13), the driven gears meshing permanently with the respective driving ring gears (34, 33, 31) and being capable of being coupled selectively for rotation with the shaft (13) by means of first and second sleeves (61, 62), the first sleeve (61) being able to select the fourth gear ratio and the second sleeve (62) being able to select the first or the third gear ratio,
**in that** the driven gears (42, 45) of the second and the fifth gear ratios, respectively, are mounted idly on the second output shaft (14), the gears meshing permanently with the respective driving ring gears (32, 35) and being capable of being coupled selectively for rotation with the shaft (14) by means of a third sleeve (63), and
**in that** the first, second and third sleeves (61-63) are substantially superimposed on the gears of the second, the fifth and the third gear ratios, respectively.

14. A gearbox according to Claim 13, **characterized in that** it comprises an intermediate shaft (16) for the reverse gear ratio, arranged parallel but not coaxial with the input shafts (11, 12) and with the output shafts (13, 14), the intermediate shaft (16) being connected to the housing (2) of the transmission unit (1) and carrying a pair of idle gears (37a, 37b) which can be fixed for rotation together by a fourth sleeve (65) and which mesh permanently with the driving ring gear (37) on the second input shaft (12) and with the driven gear (47) on the output shaft (14), respectively.

15. A gearbox according to Claim 13, **characterized in that** a third output shaft (15) for the reverse gear ratio is arranged parallel but not coaxial with the input shafts (11, 12) and with the output shafts (13, 14) and carries:
an idle gear (47) permanently meshing with the driven gear (41) on the first output shaft (13) and acting as a driven gear in the set of gears of the reverse gear ratio,
a fourth sleeve (65) which can couple the gear (47) for rotation with the shaft (15), and
a final reduction pinion (53) meshing permanently with the input gear (54) of the differential (6).

16. A gearbox with at least five gear ratios according to any one of Claims 6 to 11, **characterized in that**:
the driven gears (42, 43, 41) associated with the second, third and first gear ratios are mounted idly on the first output shaft (13), the driven gears meshing permanently with the respective driving ring gears (32, 33, 31) and being capable of being coupled selectively for rotation with the shaft (13) by means of first and second sleeves (61, 62), the first sleeve (61) being able to select the second gear ratio, and the second sleeve (62) being able to select the first or the third gear ratio,
**in that** the driven gears (44, 45) associated with the fourth and fifth gear ratios and the driven gear (47) of the reverse gear ratio are mounted idly on the second output shaft (14), the driven gears meshing permanently with the respective driving ring gears (34, 35) and being capable of being coupled selectively for rotation with the shaft (14) by means of third and fourth sleeves (63, 64), the third sleeve (63) being able to select the fourth gear ratio and the fourth sleeve (64) being able to select the fifth gear ratio or the reverse gear ratio, and
**in that** an intermediate shaft (16) supported by the housing (2) of the transmission unit (1) is arranged parallel but not coaxial with the input shafts (11, 12) and with the output shafts (13, 14) and carries idly a pair of ring gears (37a, 37b) fixed for rotation together and meshing permanently with the driving ring gear (31) on the second input shaft (12) and with the driven gear (47) on the output shaft (14), respectively.

17. A gearbox with six gear ratios according to Claim 16, **characterized in that**:
a further driven gear for the sixth gear ratio is mounted idly on the second output shaft (14) on the opposite side of the third sleeve (63) to the driven gear (44) and can be coupled for rotation with the shaft (14) by means of the third sleeve (63), and
**in that** the first input shaft (11) carries a driving ring gear meshing permanently with the driven gear for the sixth gear ratio.

18. A gearbox according to Claim 16 or Claim 17, **characterized in that** the gearbox is of the type with independent gears and the final reduction pinions (51, 52) on the first and second output shafts (13, 14) have the same number of teeth.

19. A gearbox according to Claim 16, **characterized in that**:
the gears (42, 44) of the second and the fourth gear ratios on the output shafts (13, 14) have the same number of teeth and are arranged in a manner such that both mesh permanently with the driving ring gear (32) on the first input shaft (11),
**in that** the gears (43, 45) of the third and the fifth gear ratios on the output shafts (13, 14) have the same number of teeth and are arranged in a manner such that they both mesh permanently with the driving ring gear (33) on the second input shaft (12), and
**in that** the final reduction pinions (51, 52) on the first and second output shafts (13, 14) have different numbers of teeth.

## Patentansprüche

1. Getriebe (5) für eine Kraftfahrzeugübersetzungseinheit (1), wobei das Getriebe (5) umfasst:
eine erste Antriebswelle (11) und eine zweite Antriebswelle (12), d.h. eine innere Welle (11) bzw. eine äußere Welle (12), die koaxial zueinander angeordnet sind, sowie wenigstens eine erste Abtriebswelle (13) und eine zweite Abtriebswelle (14), die zu den Antriebswellen (11, 12) parallel sind,
eine Vielzahl von antreibenden Tellerrädern oder Zahnrädern (31-35, 37), die sich auf die unterschiedlichen Übersetzungs- oder Getriebeverhältnisse beziehen und von den Antriebswellen (11, 12) gehalten sind,
eine Vielzahl von angetriebenen Tellerrädern oder Zahnrädern (41-45, 47), die sich auf die unterschiedlichen Übersetzungs- oder Getriebeverhältnisse beziehen und von den Abtriebswellen (13, 14) gehalten sind,
Wähleinrichtungen (61-65) zum Wählen des gewünschten Übersetzungsverhältnisses und
zwei Reibungskupplungen,
**dadurch gekennzeichnet, dass** das Getriebe (5) weiterhin eine Betätigungsstange (9), die verschiebbar in einem koaxialen Hohlraum der inneren Antriebswelle (11) angeordnet ist, um eine der Reibungskupplungen zu bedienen, und einen fluidbetätigten Kolben (10) enthält, der verschiebbar in einem Endabschnitt (17) der inneren Antriebswelle (11) axial entfernt von den Kupplungen zum Betätigen der Stange (9) angebracht ist.

2. Getriebe nach Anspruch 1, **dadurch gekennzeichnet, dass** die angetriebenen Zahnräder (41-45, 47) frei laufend auf den Abtriebswellen (13, 14) angebracht sind und jedes angetriebene Zahnrad zur Drehung mit der entsprechenden Welle durch eine der Wähleinrichtungen (61-65) gekoppelt werden kann.

3. Getriebe nach Anspruch 2, **dadurch gekennzeichnet, dass** die Wähleinrichtungen (61-65) zum Wählen der Übersetzungsverhältnisse derart eingerichtet sind, dass wenigstens eine von diesen die Wahl von zwei nicht aufeinander folgenden Übersetzungsverhältnissen bewirken kann.

4. Getriebe nach Anspruch 3, **dadurch gekennzeichnet, dass** die Wähleinrichtungen (61-65) zum Wählen der Übersetzungsverhältnisse Buchsen (61-65) enthalten, die dazu eingerichtet sind, auf den Abtriebswellen (13, 14) axial zu gleiten, und mit Synchronisationsvorrichtungen ausgestattet sind.

5. Getriebe nach einem der vorhergehenden Ansprüche, **dadurch gekennzeichnet, dass** die antreibenden Tellerräder (32, 34), die den geradzahligen Übersetzungsverhältnissen zugeordnet sind, von einer der beiden Antriebswellen (11, 12) gehalten sind und dass die antreibenden Tellerräder (31, 33, 35, 37), die den ungeradzahligen Übersetzungsverhältnissen und dem Rückwärtsübersetzungsverhältnis zugeordnet sind, von der anderen Antriebswelle (12, 11) gehalten sind.

6. Getriebe nach Anspruch 5, **dadurch gekennzeichnet, dass** die erste Antriebswelle (11) die antreibenden Tellerräder (32, 34) hält, die den geradzahligen Übersetzungsverhältnissen zugeordnet sind, und dass die zweite Antriebswelle (12) die antreibenden Tellerräder (31, 33, 35, 37) hält, die den ungeradzahligen Übersetzungsverhältnissen und dem Rückwärtsübersetzungsverhältnis zugeordnet sind.

7. Getriebe nach einem der vorhergehenden Ansprüche, **dadurch gekennzeichnet, dass** sich erste Lagereinrichtungen (21, 22), die die Anordnung der beiden Antriebswellen (11, 112) lagern, in einem Gehäuse (2) des Getriebes (5) befinden und zweite Lagereinrichtungen (23, 24) zwischen der ersten und der zweiten Antriebswelle (11, 12) angeordnet sind.

8. Getriebe nach Anspruch 7, **dadurch gekennzeichnet, dass** die ersten Lagereinrichtungen, die die Anordnung der beiden Antriebswellen (11, 12) lagern, ein erstes Lager (21), das an der ersten Antriebswelle (11) angebracht und in einen zylindrischen Sitz eingefügt ist, der in einer ersten Wand (7) des Gehäuses (2) ausgebildet ist, und ein zweites Lager (22) enthalten, das an der zweiten Antriebswelle (12) angebracht und in einen zylindrischen Sitz eingefügt ist, der in einer zweiten Wand (8) des Gehäuses (2) ausgebildet ist.

9. Getriebe nach Anspruch 8, **dadurch gekennzeichnet, dass** die erste Antriebswelle (11) ein Ende (17) eines vergrößerten Durchmessers hat, das axial von der zweiten Antriebswelle (12) hervorragt und auf dem das erste Lager (21) angebracht ist.

10. Getriebe nach Anspruch 8 oder 9, **dadurch gekennzeichnet, dass** das erste und das zweite Lager (21, 22) Kegelrollenradiallager sind, die X-förmig angeordnet sind.

11. Getriebe nach einem der Ansprüche 7 bis 10, **dadurch gekennzeichnet, dass** die zweiten Lagereinrichtungen zwischen der ersten und der zweiten Antriebswelle (11, 12) ein Kegelrollenradiallager (23) und ein Nadellager (24) enthalten.

12. Getriebe nach einem der vorhergehenden Ansprüche, **dadurch gekennzeichnet, dass** das Getriebe von einem Typ mit unabhängigen Zahnrädern ist und die Abtriebswellen (13, 14) entsprechende abschließende Untersetzungsritzel (51, 52) halten, die dieselbe Anzahl von Zähnen haben und dauerhaft mit einem Antriebszahnrad (54) eines Differentials (6) in Eingriff stehen.

13. Getriebe mit wenigstens fünf Übersetzungsverhältnissen nach einem der Ansprüche 6 bis 12, **dadurch gekennzeichnet, dass:**
die angetriebenen Zahnräder (44, 43, 41) des vierten, dritten bzw. ersten Übersetzungsverhältnisses frei laufend auf der ersten Abtriebswelle (13) angebracht sind, die angetriebenen Zahnräder dauerhaft mit den entsprechenden antreibenden Tellerrädern (34, 33, 31) in Eingriff stehen und wahlweise zur Drehung mit der Welle (13) mit Hilfe der ersten und der zweiten Buchse (61, 62) gekoppelt werden können, die erste Buchse (61) in der Lage ist, das vierte Übersetzungsverhältnis zu wählen, und die zweite Buchse (62) in der Lage ist, das erste oder das dritte Übersetzungsverhältnis zu wählen,
**dadurch**, dass die angetriebenen Zahnräder (42, 45) des zweiten bzw. des fünften Übersetzungsverhältnisses frei laufend auf der zweiten Abtriebswelle (14) angebracht sind, die Zahnräder dauerhaft mit den entsprechenden antreibenden Tellerrädern (32, 35) in Eingriff stehen und zur Drehung wahlweise mit der Welle (14) mit Hilfe einer dritten Buchse (63) gekoppelt werden können, und
dass die erste, die zweite und die dritte Buchse (61-63) im wesentlichen mit den Zahnrädern des zweiten, des fünften bzw. des dritten Übersetzungsverhältnisses überlagert sind.

14. Getriebe nach Anspruch 13, **dadurch gekennzeichnet, dass** es eine Zwischenwelle (16) für das Rückwärtsübersetzungsverhältnis enthält, die parallel jedoch nicht koaxial mit den Antriebswellen (11, 12) und mit den Abtriebswellen (13, 14) angeordnet ist, wobei die Zwischenwelle (16) mit dem Gehäuse (2) der Übersetzungseinheit (1) verbunden ist und zwei Leerlaufzahnräder (37a, 37b) hält, die zur Drehung durch eine vierte Buchse (65) miteinander verbunden werden können und die dauerhaft mit dem antreibenden Tellerrad (37) auf der zweiten Antriebswelle (12) und dem angetriebenen Zahnrad (47) auf der Abtriebswelle (14) in Eingriff stehen.

15. Getriebe nach Anspruch 13, **dadurch gekennzeichnet, dass** eine dritte Abtriebswelle (15) für das Rückwärtsübersetzungsverhältnis parallel jedoch nicht koaxial mit den Antriebswellen (11, 12) und mit den Abtriebswellen (13, 14) angeordnet ist und hält:
ein Leerlaufzahnrad (47), das mit dem angetriebenen Zahnrad (41) auf der ersten Abtriebswelle (13) dauerhaft in Eingriff steht und als angetriebenes Zahnrad in dem Zahnradsatz des Rückwärtsübersetzungsverhältnisses dient,
eine vierte Buchse (65), die das Zahnrad (47) zu einer Drehung mit der Welle (15) koppeln kann, und
ein abschließendes Untersetzungsritzel (53), das dauerhaft mit dem Antriebszahnrad (54) des Differentials (6) in Eingriff steht.

16. Getriebe mit wenigstens fünf Übersetzungsverhältnissen nach einem der Ansprüche 6 bis 11, **dadurch gekennzeichnet, dass:**
die angetriebenen Zahnräder (42, 43, 41), die dem zweiten, dritten und ersten Übersetzungsverhältnis zugeordnet sind, frei laufend auf der ersten Abtriebswelle (13) angeordnet sind, die angetriebenen Zahnräder dauerhaft mit den entsprechenden antreibenden Tellerrädern (32, 33, 31) in Eingriff stehen und wahlweise zur Drehung mit der Welle (13) mit Hilfe der ersten und der zweiten Buchse (61, 62) gekoppelt werden können, die erste Buchse (61) das zweite Übersetzungsverhältnis wählen kann und die zweite Buchse (62) das erste oder das dritte Übersetzungsverhältnis wählen kann,
dass die angetriebenen Zahnräder (44, 45), die dem vierten und dem fünften Übersetzungsverhältnis zugeordnet sind, und das angetriebene Zahnrad (47) des Rückwärtsübersetzungsverhältnisses frei laufend auf der zweiten Abtriebswelle (14) angebracht sind, die angetriebenen Zahnräder dauerhaft mit den entsprechenden angetriebenen Tellerrädern (34, 35) in Eingriff stehen und zur Drehung wahlweise mit der Welle (14) mit Hilfe der dritten und der vierten Buchse (63, 64) gekoppelt werden können und die dritte Buchse (63) das vierte Übersetzungsverhältnis wählen kann und die vierte Buchse (64) das fünfte Übersetzungsverhältnis oder das Rückwärtsübersetzungsverhältnis wählen kann und
**dadurch**, dass eine Zwischenwelle (16), die durch das Gehäuse (2) der Übersetzungseinheit (1) gelagert ist, parallel jedoch nicht koaxial mit den Antriebswellen (11, 12) und den Abtriebswellen (13, 14) angeordnet ist und frei laufend zwei Tellerräder (37a, 37b) hält, die zur Drehung miteinander verbunden sind und dauerhaft mit dem antreibenden Tellerrad (31) auf der zweiten Antriebswelle (12) bzw. mit dem angetriebenen Zahnrad (47) auf der Abtriebswelle (14) in Eingriff stehen.

17. Getriebe mit sechs Schaltverhältnissen nach Anspruch 16, **dadurch gekennzeichnet, dass**:
ein weiteres angetriebenes Zahnrad für das sechste Übersetzungsverhältnis frei laufend auf der zweiten Abtriebswelle (14) auf der gegenüberliegenden Seite der dritten Buchse (63) zum angetriebenen Zahnrad (44) angebracht ist und zur Drehung mit der Welle (14) mit Hilfe der dritten Buchse (63) gekoppelt werden kann und
**dadurch**, dass die erste Antriebswelle (11) ein antreibendes Tellerrad hält, das dauerhaft mit dem angetriebenen Zahnrad für das sechste Übersetzungsverhältnis in Eingriff steht.

18. Getriebe nach Anspruch 16 oder 17, **dadurch gekennzeichnet, dass** das Getriebe von einem Typ mit unabhängigen Zahnrädern ist und die abschließenden Untersetzungsritzel (51, 52) auf der ersten und der zweiten Abtriebswelle (13, 14) dieselbe Anzahl von Zähnen haben.

19. Getriebe nach Anspruch 16, **dadurch gekennzeichnet, dass:**
die Zahnräder (42, 44) des zweiten und des vierten Übersetzungsverhältnisses auf den Abtriebswellen (13, 14) dieselbe Anzahl von Zähnen haben und derart eingerichtet sind, dass beide dauerhaft mit dem antreibenden Tellerrad (32) auf der ersten Antriebswelle (11) in Eingriff stehen,
**dadurch**, dass die Zahnräder (43, 45) des dritten und des vierten Übersetzungsverhältnisses auf den Abtriebswellen (13, 14) dieselbe Anzahl von Zähnen haben und derart eingerichtet sind, dass beide dauerhaft mit dem antreibenden Tellerrad (33) auf der zweiten Antriebswelle (12) in Eingriff stehen, und
**dadurch**, dass die abschließenden Untersetzungsritzel (51, 52) auf der ersten und der zweiten Abtriebswelle (13, 14) eine unterschiedliche Anzahl von Zähnen haben.

## Revendications

1. Boîte de vitesses (5) pour une unité de transmission de véhicule à moteur (1), la boîte de vitesses (5) comportant :
un premier arbre d'entrée (11) et un deuxième arbre d'entrée (12), c'est-à-dire un arbre intérieur (11) et un arbre extérieur (12), respectivement, disposés coaxialement l'un par rapport à l'autre, et au moins un premier arbre de sortie (13) et un deuxième arbre de sortie (14), parallèles aux arbres d'entrée (11, 12),
une multiplicité de couronnes d'entrée ou de pignons d'entraînement (31 à 35, 37), se rapportant aux différents rapports de transmission ou vitesses, et portés par les arbres d'entrée (11, 12),
une multiplicité de couronnes d'entrée ou de pignons entraînés (41 à 45, 47), se rapportant aux différents rapports de transmission ou vitesses, et portés par les arbres de sortie (13, 14),
des moyens de sélection (61 à 65) pour la sélection de la vitesse souhaité, et
deux embrayages à friction,
**caractérisée en ce que** la boîte de vitesses (5) comporte en outre une tige d'actionnement (9) disposée de façon coulissante dans une cavité coaxiale de l'arbre d'entrée intérieur (11) pour l'actionnement d'un des embrayages à friction, et un piston actionné par fluide (10) monté de façon coulissante dans une partie d'extrémité (17) de l'arbre d'entrée intérieur (11) axialement éloigné des embrayages afin d'actionner la tige (9).

2. Boîte de vitesses selon la revendication 1,
**caractérisée en ce que** les pignons entraînés (41 à 45, 47) sont montés de façon folle sur les arbres de sortie (13, 14) et chaque pignon entraîné peut être relié pour rotation à l'arbre respectif par un des moyens de sélection (61 à 65).

3. Boîte de vitesses selon la revendication 2,
**caractérisée en ce que** les moyens de sélection (61 à 65) destinés à sélectionner les vitesses sont prévus d'une manière telle que au moins l'un deux peut provoquer la sélection de deux vitesses non consécutives.

4. Boîte de vitesses selon la revendication 3,
**caractérisée en ce que** les moyens de sélection (61 à 65) destinés à sélectionner les vitesses comportent des manchons (61 à 65) prévus pour coulisser axialement sur les arbres de sortie (13, 14) et pourvus de dispositifs de synchronisation.

5. Boîte de vitesses selon l'une quelconque des revendications précédentes, **caractérisée en ce que** les couronnes dentées d'entraînement (32, 34) associées aux vitesses paires sont portées par un des deux arbres d'entrée (11, 12) et **en ce que** les couronnes dentées d'entraînement (31, 33, 35, 37) associées aux vitesses impaires et à la marche arrière sont portées par l'autre arbre d'entrée (11, 12).

6. Boîte de vitesses selon la revendication 5,
**caractérisée en ce que** le premier arbre d'entrée (11) porte les couronnes dentées d'entraînement (32, 34) associées aux vitesses paires, et **en ce que** le deuxième arbre d'entrée (12) porte les couronnes dentées d'entraînement (31, 33, 35, 37) associées aux vitesses impaires et à la marche arrière.

7. Boîte de vitesses selon l'une quelconque des revendications précédentes, **caractérisée en ce que** des premiers moyens de support (21, 22) destinés à supporter l'ensemble des deux arbres d'entrée (11, 12) sont logés dans un carter (2) du boîte de vitesses (5) et des deuxièmes moyens de support (23, 24) sont disposés entre les premier et deuxième arbres d'entrée (11, 12).

8. Boîte de vitesses selon la revendication 7,
**caractérisée en ce que** les premiers moyens de support destinés à supporter l'ensemble des deux arbres d'entrée (11, 12) comportent un premier palier (21) monté sur le premier arbre d'entrée (11) et ajusté dans un siège cylindrique formé dans une première paroi (7) du carter (2) et un deuxième palier (22) monté sur le deuxième arbre d'entrée (12) et ajusté dans un siège cylindrique formé dans une deuxième paroi (8) du carter (2).

9. Boîte de vitesses selon la revendication 8,
**caractérisée en ce que** le premier arbre d'entrée (11) a une extrémité (17) de diamètre agrandi, qui dépasse axialement du deuxième arbre d'entrée (12) et sur laquelle est monté le premier palier (21).

10. Boîte de vitesses selon la revendication 8 ou la revendication 9, **caractérisée en ce que** les premier et deuxième paliers (21, 22) sont des roulements radiaux à rouleaux coniques montés suivant un agencement en X.

11. Boîte de vitesses selon l'une quelconque des revendications 7 à 10, **caractérisée en ce que** les deuxièmes moyens de support entre les premier et deuxième arbres d'entrée (11, 12) comportent un roulement radial à rouleaux coniques (23) et un roulement à aiguilles (24).

12. Boîte de vitesses selon l'une quelconque des revendications précédentes, **caractérisée en ce que** la boîte de vitesses est du type à pignons indépendants et les arbres de sortie (13, 14) portent des pignons de réduction finale respectifs (51, 52) ayant le même nombre de dents et en prise permanente avec un pignon d'entrée (54) d'un différentiel (6).

13. Boîte de vitesses avec au moins cinq vitesses selon l'une quelconque des revendications 6 à 12, **caractérisée en ce que** :
les pignons entraînés (44, 43, 41) des quatrième, troisième et première vitesses, respectivement, sont montés de façon folle sur le premier arbre de sortie (13), les pignons entraînés étant en prise de façon permanente avec les couronnes dentées d'entraînement respectives (34, 33, 31) et
étant capables d'être reliés de manière sélective pour rotation à l'arbre (13) au moyen de premier et deuxième manchons (61, 62), le premier manchon (61) étant capable de sélectionner la quatrième vitesse et le deuxième manchon (62) étant capable de sélectionner la première ou la troisième vitesse,
**en ce que** les pignons entraînés (42, 45) de la deuxième et de la cinquième vitesse, respectivement, sont montés de façon folle sur le deuxième arbre de sortie (14), les pignons entraînés étant en prise de façon permanente avec les couronnes dentées d'entraînement respectives (32, 35) et étant capables d'être reliés de manière sélective pour rotation à l'arbre (14) au moyen d'un troisième manchon (63), et
**en ce que** les premier, deuxième et troisième manchons (61 à 63) sont sensiblement superposés sur les pignons de la deuxième, la cinquième et la troisième vitesse, respectivement.

14. Boîte de vitesses selon la revendication 13,
**caractérisée en ce qu'**elle comporte un arbre intermédiaire (16) pour la marche arrière, disposé de manière parallèle mais pas coaxiale aux arbres d'entrée (11, 12) et aux arbres de sortie (13, 14), l'arbre intermédiaire (16) étant relié au carter (2) de l'unité de transmission (1) et portant une paire de pignons fous (37a, 37b) qui peuvent être fixés en rotation ensemble par un quatrième manchon (65) et qui sont en prise de façon permanente avec la couronne dentée d'entraînement (37) sur le deuxième arbre d'entrée (12) et avec le pignon entraîné (47) sur l'arbre de sortie (14), respectivement.

15. Boîte de vitesses selon la revendication 13,
**caractérisée en ce qu'**un troisième arbre de sortie (15) pour la marche arrière est disposé de manière parallèle mais pas coaxiale aux arbres d'entrée (11, 12) et aux arbres de sortie (13, 14) et porte :
un pignon fou (47) en prise de façon permanente avec le pignon entraîné (41) sur le premier arbre de sortie (13) et agissant comme un pignon entraîné dans l'ensemble de pignons de la marche arrière,
un quatrième manchon (65) qui peut relier le pignon (47) pour rotation à l'arbre (15), et
un pignon de réduction finale (53) en prise de façon permanente avec le pignon d'entrée (54) du différentiel (6).

16. Boîte de vitesses avec au moins cinq vitesses selon l'une quelconque des revendications 6 à 11, **caractérisée en ce que** :
les pignons entraînés (42, 43, 41) associés aux deuxième, troisième et première vitesses sont montés de façon folle sur le premier arbre de sortie (13), les pignons entraînés étant en prise de façon permanente avec les couronnes dentées d'entraînement respectives (32, 33, 31) et étant capables d'être reliés de manière sélective pour rotation à l'arbre (13) au moyen de premier et deuxième manchons (61, 62), le premier manchon (61) étant capable de sélectionner la deuxième vitesse, et le deuxième manchon (62) étant capable de sélectionner la première ou la troisième vitesse,
**en ce que** les pignons entraînés (44, 45) associés aux quatrième et cinquième vitesses et le pignon entraîné (47) de la marche arrière sont montés de façon folle sur le deuxième arbre de sortie (14), les pignons entraînés étant en prise de façon permanente avec les couronnes dentées d'entraînement respectives (34, 35) et étant capables d'être reliés de manière sélective pour rotation à l'arbre (14) au moyen de troisième et quatrième manchons (63, 64), le troisième manchon (63) étant capable de sélectionner la quatrième vitesse et le quatrième manchon (64) étant capable de sélectionner la cinquième vitesse ou la marche arrière, et
**en ce qu'**un arbre intermédiaire (16) supporté par le carter (2) de l'unité de transmission (1) est disposé de manière parallèle mais pas coaxiale aux arbres d'entrée (11, 12) et aux arbres de sortie (13, 14) et porte de façon folle une paire de couronnes dentées (37a, 37b) fixées en rotation ensemble et en prise de façon permanente avec la couronne dentée d'entraînement (31) sur le deuxième arbre d'entrée (12) et avec le pignon entraîné (47) sur l'arbre de sortie (14), respectivement.

17. Boîte de vitesses avec six vitesses selon la revendication 16, **caractérisée en ce que** :
un autre pignon entraîné pour la sixième vitesse est monté de façon folle sur le deuxième arbre de sortie (14) sur le côté opposé du troisième manchon (63) par rapport au pignon entraîné (44) et peut être relié pour rotation à l'arbre (14) au moyen du troisième manchon (63), et
**en ce que** le premier arbre d'entrée (11) porte une couronne dentée d'entraînement en prise de façon permanente avec le pignon entraîné pour la sixième vitesse.

18. Boîte de vitesses selon la revendication 16 ou la revendication 17, **caractérisée en ce que** la boîte de vitesses est du type à pignons indépendants et les pignons de réduction finale (51, 52) sur les premier et deuxième arbres de sortie (13, 14) ont le même nombre de dents.

19. Boîte de vitesses selon la revendication 16,
**caractérisée en ce que** :
les pignons (42, 44) de la deuxième et la quatrième vitesse sur les arbres de sortie (13, 14) ont le même nombre de dents et sont disposés d'une manière telle que les deux sont en prise de façon permanente avec la couronne dentée d'entraînement (32) sur le premier arbre d'entrée (11),
**en ce que** les pignons (43, 45) de la troisième et la cinquième vitesse sur les arbres de sortie (13, 14) ont le même nombre de dents et sont disposés d'une manière telle que les deux sont en prise de façon permanente avec la couronne dentée d'entraînement (33) sur le deuxième arbre d'entrée (12), et
**en ce que** les pignons de réduction finale (51, 52) sur les premier et deuxième arbres de sortie (13, 14) ont des nombres de dents différents.
